# EUROPEAN PATENT APPLICATION

(11) **EP 2 509 183 A1**
(43) Date of publication of application: **10.10.2012**
(21) Application number: 10833124.0
(22) Date of filing: 18.11.2010
(51) Int. Cl.: H02J 3/38, H02M 7/48

(54) **GRID CONNECTION APPARATUS**

(30) Priority: 30.11.2009 JP 2009271846; 18.11.2010 JP 2010257538
(71) Applicant: Sanyo Electric Co., Ltd., Osaka 570-8677 (JP)
(72) Inventor: MORITA Isao, Moriguchi-shi Osaka 570-8677 (JP); MAKINO Yasuhiro, Moriguchi-shi Osaka 570-8677 (JP)
(74) Representative: Glawe, Delfs, Moll
(86) International application number: PCT/JP2010/070559
(87) International publication number: WO 2011/065278

(57) **Abstract**

Provided is an inverter apparatus, wherein the space necessary for installing a grid connection relay is made to be small, and the state of contacts of the grid connection relay can be monitored. When a commercial power system (30) is in normal operation state, an inverter circuit (5) is controlled to be in stopped state, and the grid connection relays (7) are controlled to be in opened state, detection of whether or not the contact of a first grid connection relay (71) or a second grid connection relay (72), which comprise the grid connection relay (7), is stuck together can be conducted before a grid connection is made between the inverter circuit (5) and the commercial power system (30), by detecting the potential difference between the W side of the first grid connection relay (71) and the Z side of the second grid connection relay (72), and the potential difference between the Y side of the first grid connection relay (71) and the X side of the second grid connection relay (72), with photocouplers (91, 95), respectively.

## Description

### Technical Field

The present invention relates to an inverter apparatus which converts DC power generated by a solar cell, a fuel cell, or the like into AC power and supplies the AC power to a commercial power system.

### Background Art

In the related art, disclosed is an inverter apparatus which converts DC power generated by a solar cell, a fuel cell, or the like into AC power and supplies the power to a commercial power system.

As an example of a grid connection system including such an inverter apparatus, a solar cell power generation system is configured to include a solar cell of which the generating powder varies with a quantity of solar radiation and an inverter apparatus which converts DC power from the solar cell into AC power and supplies the AC power to a commercial power system.

The inverter apparatus is configured to include a voltage booster circuit which boosts DC voltage of the solar cell, an inverter circuit which converts the output of the voltage booster circuit into AC voltage, a filter circuit which shapes the output of the inverter circuit into a sinusoidal wave form, a grid connection relay which is connected between the filter circuit and the commercial system, a current detection unit which is connected between the filter circuit and the grid connection relay to detect current flowing therebetween, a commercial system voltage detection unit which is installed at the commercial power system side of the grid connection relay, and a control circuit which supplies to ON and OFF signals to switch elements of the voltage booster circuit or the inverter circuit configured with a micro computer.

Interconnection and disconnection of the grid connection relay is controlled by control signals from the control circuit, so that the grid connection relay is connected between the filter circuit and the commercial power system, and thus, the inverter apparatus and the commercial system are interconnected or disconnected. However, if the phenomenon of sticking of the contact point occurs in the relay used for the grid connection relay due to abnormal current or lifecycle of the contact point, although a control signal is received from the control circuit, a situation where the inverter apparatus cannot be disconnected is likely to occur.

In order to detect a deterioration in safety due to the abnormality of the grid connection relay, in the inverter apparatus of the related art, a multi-contact point relay is used so that the connection states are the same, and a first contact point which is different from the contact point for connecting the inverter apparatus and the commercial power system is used for monitoring the contact points, so that it is determined by observing the presence and absence of current flowing through the contact point that the other contact points has the same state (for example, Patent Document 1).

### [Patent Document 1] JP-A-2008-35655

### Summary of Invention

### Problems to Be Solved By Invention

However, in a case where the first contact point which is different from the contact point for connecting the inverter apparatus and the commercial system described abode is used for monitoring the contact points, the number of contact points is increased, so that it is necessary to secure the corresponding installation space of the grid connection relay.
The invention is to provide an inverter apparatus capable of reducing the installation space of the grid connection relay and monitoring the connection state of the grid connection relay.

### Means for Solving Problems

In order to achieve the above-described objects, according to an aspect of the invention, there is provided an inverter apparatus including: an inverter circuit which converts DC power into AC power and supplies the AC power to a pair of lines; first and second grid connection relays which connect the pair of lines and a commercial power system; and a control circuit which operates the inverter circuit, the first grid connection relay, and the second grid connection relay, wherein the first grid connection relay is disposed in the line of the pair of lines, wherein the second grid connection relay is disposed in the other line of the pair of lines, wherein the inverter apparatus includes a first voltage difference detection circuit which detects a voltage difference between the inverter circuit side of the first grid connection relay and the commercial power system side of the second grid connection relay and a second voltage difference detection circuit which detects a voltage difference between the commercial power system side of the first grid connection relay and the inverter circuit side of the second grid connection relay, and wherein, in the case where the commercial power system is a power stoppage state, when a voltage is applied from the inverter circuit to the pair of lines, when the second grid connection relay is controlled to be in an open state during the voltage applying operation, if the voltage difference detected by the first voltage difference detection circuit is equal to or higher than a predetermined value, the control circuit determines that a contact point of the second grid connection relay is stuck, and when a voltage is applied from the inverter circuit to the pair of lines, when the first grid connection relay is controlled to be in an open state, if the voltage difference detected by the second voltage difference detection circuit is equal to or higher than a predetermined value, the control circuit determines that a contact point of the first grid connection relay is stuck.

According to the invention, the interconnection and disconnection between the inverter circuit and the commercial power system is performed by using the first and second grid connection relays, and the sticking of each grid connection relay can be detected by using the first voltage difference detection circuit or the second voltage difference detection circuit, so that it is possible to provide an inverter apparatus capable of suppressing an increase in the number of contact points of the relay, reducing the installation space of the grid connection relay, and monitoring the connection state of the grid connection relay.

In addition, in the above-described aspect of the invention, when the inverter circuit is stopped, when the first grid connection relay is controlled to be in the open state, if the voltage difference detected by the first voltage difference detection circuit is equal to or higher than a predetermined value, the control circuit may determine that the contact point of the first grid connection relay is stuck, and when the inverter circuit is stopped, when the second grid connection relay is controlled to be in the open state, if the voltage difference detected by the second voltage difference detection circuit is equal to or higher than a predetermined value, the control circuit may determine that the contact point of the second grid connection relay is stuck.

In addition, in the above-described aspect of the invention, in the case where sticking of the contact point of the first grid connection relay is determined, the control circuit may allow the second grid connection relay to be in the connected state; and in the case where sticking of the contact point of the second grid connection relay is determined, the control circuit may allow the first grid connection relay to be in the connected state.

In addition, in the above-described aspect of the invention, the first voltage difference detection circuit and/or the second voltage difference detection circuit may be a detection circuit having a photocoupler which is operated if current flows in a light-emitting portion, wherein, if a voltage difference equal to or higher than the predetermined value is applied to the detection circuit, the current flows in the light-emitting portion, so that light is emitted, and wherein, in the case where the emitted light is detected, the control circuit determines that the relay is stuck.

In addition, in the above-described aspect of the invention, the DC power may be generated from a solar cell, a fuel cell, or power generation facilities such as wind powder generation.

In addition, according to another aspect of the invention, there is provided an inverter apparatus including: an inverter circuit which converts DC power into AC power and supplies the AC power to a pair of lines; first and second grid connection relays which connect the pair of lines and a commercial power system; and a control circuit which operates the inverter circuit, the first grid connection relay, and the second grid connection relay, wherein the first grid connection relay is disposed in the line of the pair of lines, wherein the second grid connection relay is disposed in the other line of the pair of lines, wherein the inverter apparatus includes a first voltage difference detection circuit which detects a voltage difference between the inverter circuit side of the first grid connection relay and the commercial power system side of the second grid connection relay and a second voltage difference detection circuit which detects a voltage difference between the commercial power system side of the first grid connection relay and the inverter circuit side of the second grid connection relay, and wherein, in the case where the commercial power system is in a power supply state, when the inverter circuit is stopped, when the first grid connection relay is controlled to be in an open state, if the voltage difference detected by the first voltage difference detection circuit is equal to or higher than a predetermined value, the control circuit determines that a contact point of the first grid connection relay is stuck, and when the inverter circuit is stopped, when the second grid connection relay is controlled to be in an open state, if the voltage difference detected by the second voltage difference detection circuit is equal to or higher than a predetermined value, the control circuit determines that a contact point of the second grid connection relay is stuck.

### Advantageous Effects of Invention

According to the invention, it is possible to provide an inverter apparatus capable of reducing the installation space of a grid connection relay and monitoring a connection state of the grid connection relay.

### Brief Description of Drawings

Fig. 1 is a diagram illustrating a grid connection system according to the invention.
Fig. 2 is a diagram illustrating a first voltage difference detection circuit for determining a connection state of grid connection relays 71 and 72.
Fig. 3 is a diagram illustrating a second voltage difference detection circuit for determining the connection state of the grid connection relays 71 and 72.
Fig. 4 illustrates a sticking detection flow of a control circuit 8 during power supply of a commercial power system 30.
Fig. 5 is a diagram illustrating a grid connection system according to the invention in the case where a circuit sharing the ground is disposed between a noise filter circuit 6 and grid connection relays 71 and 72 and between a grid connection relay 7 and a commercial power system.
Fig. 6 illustrates a sticking detection flow of a control circuit 8 during power supply of a commercial power system 30.

### Mode to Carry Out Invention

Hereinafter, embodiments of the invention will be described with reference to the drawings.

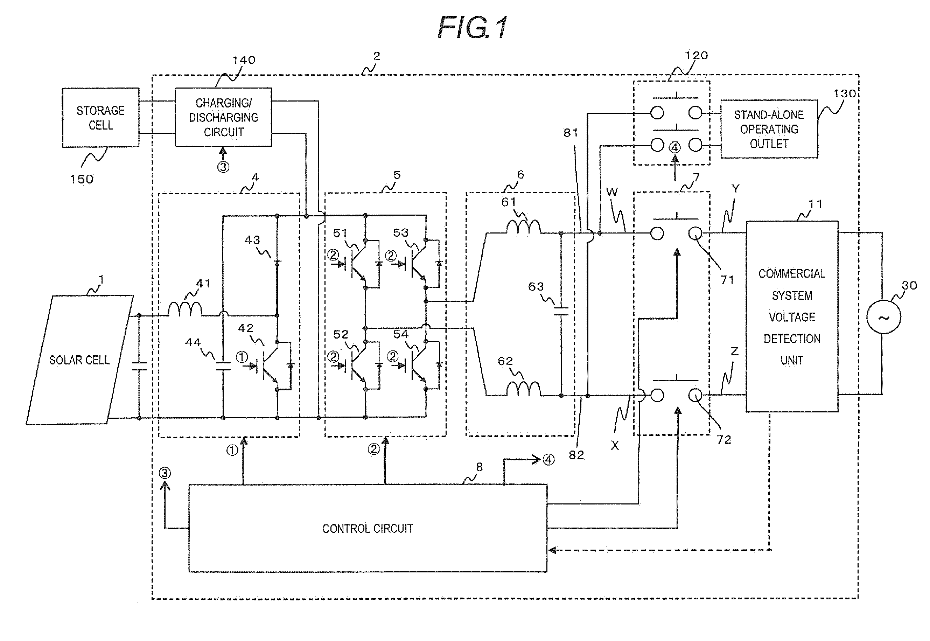

Fig. 1 is a diagram illustrating a configuration oaf a solar radiation power generation system as an example of a grid connection system including an inverter apparatus according to the invention.

The power generation system is configured to include a solar cell 1 of which the generating power is changed according to a quantity of solar radiation and an inverter apparatus 2 which converts DC power generated by the solar cell 1 into AC power and supplies the AC power to a commercial power system 30.

The inverter apparatus 2 is configured to include a voltage booster circuit 4 which boosts DC voltage of the solar cell 1, an inverter circuit 5 which converts the output of the voltage booster circuit 4 into AC voltage, a filter circuit 6 which shapes the output of the inverter circuit 5 into a sinusoidal wave form, a grid connection relay 7 which is connected between the filter circuit 6 and the commercial power system 30, a current detection unit (not shown) which is connected between the filter circuit 6 and the grid connection relay 7 to detect current flowing therebetween, a commercial system voltage detection unit 11 which is installed at the commercial power system, 30 side of the grid connection relay 7, a charging/discharging circuit 140 which is connected to an electric circuit branched between the voltage booster circuit 4 and the inverter circuit 5 to charge a storage cell 150, a stand-alone operating outlet 130 which is connected through a stand-alone operating relay 120 to an electric circuit branched between the filter circuit 6 and the grid connection relay 7, and a control circuit 8 which is configured with a microcomputer to supply ON and OFF signals to switch elements constituting the voltage booster circuit 4, the inverter circuit 5, and the charging/discharging circuit 140 to perform control of these circuits.

In the voltage booster circuit 4, the output voltage of the solar cell 1 is boosted up to a predetermined voltage which is set in advance. PWM (pulse width modulation) control of allowing the inverter circuit 5 to modulate a carrier wave having a predetermined frequency into a modulated wave having the same frequency as that of the commercial power system is performed, so that the boosted DC voltage as an input is converted into a pseudo sinusoidal wave. After that, a high frequency component included in the output of the inverter circuit 5 is removed by the filter circuit 6, so that the input DC power is converted into a sinusoidal AC power and the AC power is output.

The voltage booster circuit 4 is configured to include a reactor 41, a switch element 42 such as an IGBT (insulated gate bipolar transistor), a diode 43, and a condenser 44. More specifically, the positive electrode side of the solar cell 1 is connected to the one end of the reactor 41, and the collector side of the switch element 42 and the anode side of the diode 43 are connected to the other end. In addition, the negative electrode side of the solar cell 1 is connected to the emitter side of the switch element 42, and the cathode side of the diode 43 is connected through the condenser 44 to the emitter side of the switch element 42. The output voltage of the voltage booster circuit 4 is detected by a voltage detector (not shown), and the detection signal is input to the control circuit 8. Next, a pulse signal of which the duty ratio is determined by performing a calculation process using the control circuit 8 is applied to the gate of the switch element 42, and the output voltage of the voltage booster circuit 4 reaches a predetermined voltage, so that feedback control is performed.

The inverter circuit 5 is configured by connecting switch elements 51 to 54 such as IGBT in a full bridge connection. The operation of the inverter circuit 5 is controlled by the control circuit 8. More specifically, each of the switch elements 51 two 54 is switched according to PWM control of the control circuit 8, so that the DC power of the voltage booster circuit 4 is converted into AC power. In this manner, the inverter circuit 5 supplies the converted AC power to a pair of lines 81 and 82.

The filter circuit 6 is configured to include reactors 61 and 62 and a condenser 63. More specifically, the one end of the reactor 61 is connected to a contact point of the serially-connected switch elements 53 and 54, and the one end of the reactor 62 is connected to a contact point of the serially-connected switch elements 51 and 52. In addition, the condenser 63 is connected between the other ends of the reactors 61 and 62. In this configuration, a high frequency component of the AC power output from the inverter circuit 5 is removed, and the output voltage of the inverter circuit 5 is shaped in a sinusoidal wave form, so that the power is output to the commercial system 30.

The grid connection relay 7 is configured to include a first grid connection relay 71 and a second grid connection relay 72 and is connected through a pair of lines 81 and 82 to the commercial power system 30. The operations (connected state/open state) of the first and second grid connection relays 71 and 72 are controlled according to control signals from the control circuit 8, so that the first and second grid connection relays 71 and 72 are connected between the filter circuit 6 and the commercial power system 30. More specifically, the first grid connection relay 71 is disposed in the one line 81 of the pair of lines 81 and 82, and the second grid connection relay 72 is disposed in the other line 82 of the pair of lines 81 and 82. If the first grid connection relay 71 and the second grid connection relay 72 are in the connected state, the inverter apparatus 2 and the commercial system 30 are interconnected; and if the first grid connection relay 71 and the grid connection relay 72 are in the open state, the inverter apparatus 2 and the commercial system 30 are disconnected. In this manner, the grid connection relay 7 is controlled by the control circuit 8, so that the inverter apparatus 2 and the commercial system 30 are interconnected or disconnected, and thus, power supply is controlled.

The commercial system voltage detection unit 11 detects the voltage of the commercial power system 30. The detected voltage is transmitted to the control circuit 8, and the control circuit 8 determines whether or not the voltage of the commercial power system 30 is within an appropriate range of operation regulation (for example, the control circuit 8 determines whether the commercial power system 30 is in a power supply state or in a power stoppage state). The fundamental frequency is the frequency of the commercial power system 30, which is 60Hz or 50Hz. In the case where the detected output voltage is within the appropriate range, it is determined that the commercial power system 30 is in the power supply state where it is operated normally, and thus, the inverter apparatus 2 allows the control circuit 8 to perform normal operation (interconnection operation). In addition, in the case where the detected output voltage is beyond the appropriate range, it is determined that the commercial power system 30 is in an abnormal state (for example, a power stoppage state, or the like), and thus, stopping of the inverter circuit 5 (blocking of the gate signal), disconnection of the grid connection relay 7, stopping of the voltage booster circuit 4, and the like are performed by the control circuit 8, so that the inverter apparatus 2 stops its operation.

In addition, the inverter apparatus 2 is configured to include a stand-alone operating outlet 130 so as to supply power to a load even in the case where the commercial power system 30 is in the abnormal state. In the case where it is determined by the control circuit 8 when the commercial power system 30 is in the power stoppage state, AC power of which the frequency and voltage are the same as those of the commercial power system is supplied to the stand-alone operating outlet 130. In this case, the control circuit 8 allows the grid connection relay 7 to be in the open state and allows the stand-alone operating relay 120 to be in the connected state, so that the AC power of which the frequency and voltage are the same as those of the commercial power system is generated in the inverter circuit 5, and thus, the power is supplied to the stand-alone operating outlet 130. By doing this, even in the case where the commercial power system 30 is in the abnormal state (for example, during the power stoppage), the power is supplied from the stand-alone operating outlet 130, so that the power can be supplied to a desired load. In addition, in this manner, the state where the operation of supplying power to a load without supplying power to the commercial power system 30 is performed by the inverter apparatus 2 is called a stand-alone operating state.

The charging/discharging circuit 140 charges the storage cell 150 by using the power output by the voltage booster circuit 5. In addition, the AC power of the commercial power system 30 is rectified by the inverter circuit 5, and the charging/discharging circuit 140 charges the storage cell 150 by using the obtained rectified power. In addition, the charging/discharging circuit 140 is configured to operate (to supply the power from the storage cell to the load) in the case where the power output from the solar cell 1 is insufficient as the power supplied to the load during the stand-alone operation, so that power is stably supplied to the load.

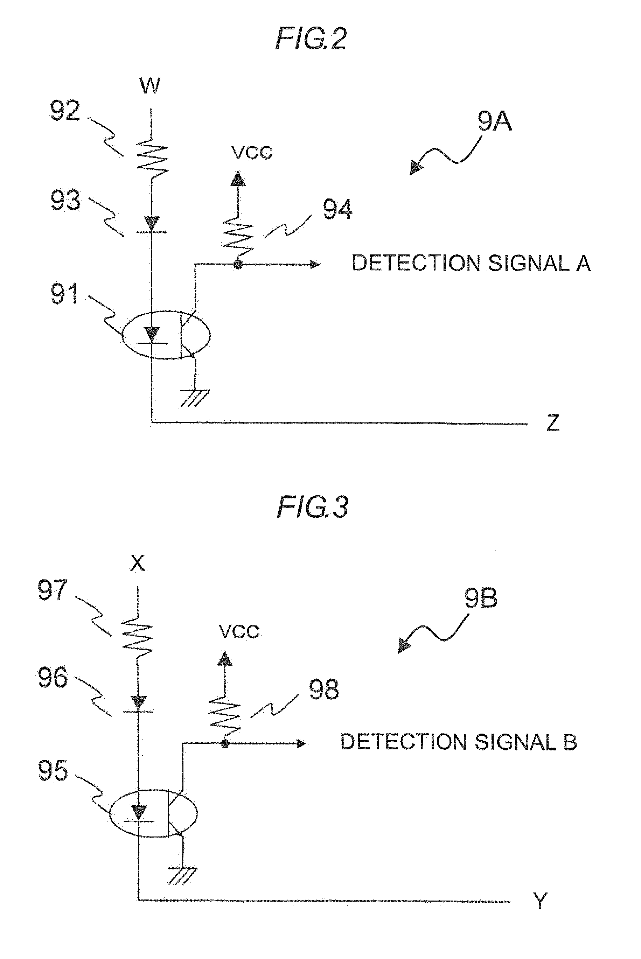

Fig. 2 is a diagram illustrating a first voltage difference detection circuit 9A for determining a connected state of the grid connection relays 71 and 72.

The one end of the first voltage difference detection circuit 9A is connected to the inverter circuit 5 side (point W in Figs. 1 and 2) of the first grid connection relay 71, and the other end is connected to the commercial power system (30) side (point Z in Figs. 1 and 2) of the second grid connection relay 72.

The first voltage difference detection circuit 9A is a detection circuit including a photocoupler 91 which operates when current flows in the light-emitting portion, a resistor 92, a diode 93, and a pull-up resistor 94. The resistor 92, the diode 93, and the light-emitting portion (light-emitting diode) of the photocoupler 91 are connected in parallel to the first grid connection relay 71; and the resistor 92, the diode 93, and the light-emitting portion of the photocoupler 91 are serially connected in this order from the one end side of the first voltage difference detection circuit 9A.

More specifically, the one end of the resistor 92 is connected to the inverter circuit side W of the first grid connection relay 71, and the other end is connected to the anode of the diode 93. In addition, the cathode of the diode 93 is connected to the anode of the light-emitting portion of the photocoupler 91, and the cathode of the light-emitting portion of the photocoupler 91 is connected to the commercial power system side Z of the second grid connection relay 72. In addition, the one end (emitter side) of the light-receiving portion (transistor) of the photocoupler 91 is connected to ground, and the other end (collector side) is converted into a detection signal A of Hi (VCC)/Lo (ground) by the pull-up resistor 94. In other words, in the first voltage difference detection circuit 9A, if a voltage difference equal to or higher than a predetermined value is applied between the points W and Z, current flows in the light-emitting portion of the photocoupler 91, so that light is emitted. The light-receiving portion of the photocoupler senses the emitted light to output the Lo signal as a detection signal A to the control circuit 8.

Fig. 3 is a diagram illustrating a second voltage difference detection circuit 9B for determining the connected state of the grid connection relay 71 or 72.

The one end of the second voltage difference detection circuit 9B is connected to the inverter circuit (5) side (point X in Figs. 1 and 3) of the second grid connection relay 72, and the other side is connected to the commercial power system (30) side (point Y in Figs. 1 and 3) of the first grid connection relay 71.

The second voltage difference detection circuit 9B is a detection circuit including a photocoupler 95 which operates when current flows in the light-emitting portion, a resistor 97, a diode 96, and a pull-up resistor 98. The resistor 97, the diode 96, and the light-emitting portion (light-emitting diode) of the photocoupler 95 is connected in parallel to the second grid connection relay 72; and the resistor 97, the diode 96, and the light-emitting portion of the photocoupler 95 are serially connected in this order from the other end side of the second voltage difference detection circuit 9B.

More specifically, the one end of the resistor 97 is connected to the commercial power system side X of the second grid connection relay 72, and the other end is connected to the anode of the diode 96. In addition, the cathode of the diode 96 is connected to the anode of the light-emitting portion of the photocoupler 95, and the cathode of the light-emitting portion of the photocoupler 95 is connected to the commercial power system side Y of the first grid connection relay 71. If addition, the one end (emitter side) of the light-receiving portion (transistor) of the photocoupler 95 is connected to ground, and the other end (collector side) is converted into a detection signal B of Hi (VCC)/Lo (ground) by the pull-up resistor 98. In other words, in the second voltage difference detection circuit 9B, if a voltage difference equal to or higher than a predetermined value is applied between the points X and Y, current flows in the light-emitting portion of the photocoupler 95, so that light is emitted. The light-receiving portion of the photocoupler senses the emitted light to output the Lo signal as a detection B to the control circuit 8.

In the case where the emitted light of the light-emitting portion of the photocoupler is detected (in the case where the Lo signal of the detection signal A or B is detected), the control circuit 8 determines that the grid connection relays 71 and 72 are stuck. Since the detection of the Lo signal of the detection signal A or B by the control circuit 8 is performed by adding a voltages difference equal to or higher than a predetermined value between the points W and Z or between the points X and Y by the first or second voltage difference detection circuit 9A or 9B as described above, in the case where the voltage difference between the points W and Z or between the points X and Y is equal to or higher than the predetermined value, the control circuit 8 may determine that the grid connection relays 71 and 72 are stuck.

In the case where the commercial power system 30 supplies power (during the power supply) and in the case where the commercial power system 30 is in the power stoppage state (during the power stoppage), the control circuit 8 switches the detection signal A and B with respect to the grid connection relays 71 and 72 of which sticking is detected. By doing this, when the commercial power system is in the power stoppage state or when the commercial power system supplies power, it can be accurately determined whether or not the grid connection relays are stuck. Hereinafter, the sticking detection operation of the control circuit 8 will be described in detail with respect to the case where the commercial power system, 30 supplies power and the case where the commercial power system, 30 is in the power stoppage state.

### (Sticking Detection During Power supply of Commercial Power System 30)

In the case where the commercial power system 30 is in the power supply state, when the inverter circuit 5 is stopped, when the first grid connection relay 71 is controlled to be in the open state, if the voltage difference detected by the first voltage difference detection circuit 71 is equal to or higher than a predetermined value (if the detection signal A is Lo), the control circuit 8 determines that the contact point of the first grid connection relay 71 is stuck. In addition, when the inverter circuit 5 is allowed to be in the stopped state, when the second grid connection relay 72 is controlled in the open state, if the voltage difference detected by the second voltage difference detection circuit 9B is equal to or higher than a predetermined value (if the detection signal B is Leo), the control circuit 8 determines that the contact point of the second grid connection relay 72 is stuck.

If the case where sticking occurs in the first grid connection relay 71, although a control signal for allowing the first grid connection relay 71 to be in the open state is output from the control circuit 8, the first grid connection relay 71 is in the connected state. Therefore, current flows in a path to the commercial system 30 through the first grid connection relay 71, the resistor 92, the diode 93, and the light-emitting portion of the photocoupler 91 from the commercial system 30, so that the detection signal A (Lo) is detected at the collector side of the light-receiving portion of the photocoupler 91. The control circuit 8 receives the detection signal A to determine that the first grid connection relay 71 is in the stuck state. In this manner, the control circuit 8 can determine based on the voltage difference between the points W and Z detected by the first voltage difference detection circuit 9A whether or not the contact point of the first grid connection relay 71 is stuck.

In addition, in the case where sticking occurs in the second grid connection relay 72, although a control signal for allowing the second grid connection relay 72 to be in the open state is output from the control circuit 8, the second grid connection relay 72 is in the connected state. Therefore, current flows in a path from the commercial system 30 through the second grid connection relay 72, the resistor 97, the diode 96, and the light-emitting portion of the photocoupler 95 from the commercial system 30, so that the detection signal B (Lo) is detected at the collector side of the light-receiving portion of the photocoupler 95. The control circuit 8 receives the detection signal B to determine that the second grid connection relay 72 is in the stuck state. In this manner, the control circuit 8 can determine based on the voltage difference between the points X and Y detected by the second voltage difference detection circuit 9B whether or not the contact point of the second grid connection relay 72 is stuck.

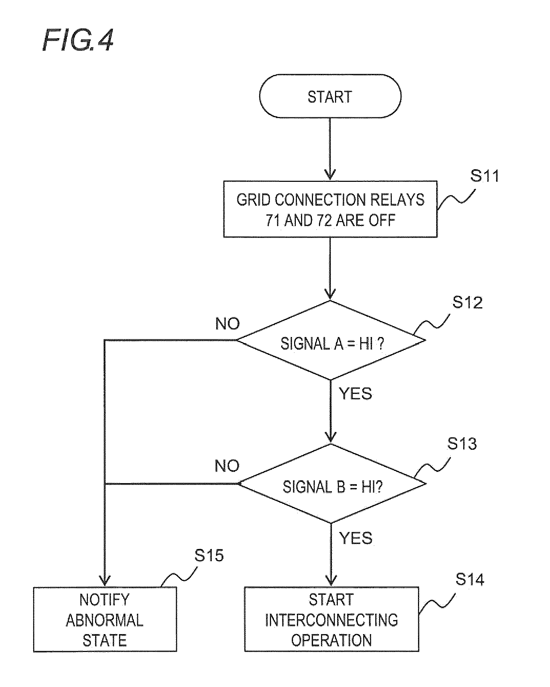

Fig. 4 illustrates the sticking detection flow of the control circuit 8 during the power supply of the commercial power system 30. During the power supply of the commercial power system 30, when the sticking detection is started by the control circuit 8, the procedure proceeds to Step S 11.

In Step S11, the control circuit 8 transmits signals to the grid connection relays 71 and 72 so that the first grid connection relay 71 and the second grid connection relay 72 are in the open state, and the procedure proceeds to Step S12.

In Step S12, the control circuit 8 determines whether or not the detection signal A is in the Hi state, so that it is determined whether or not the first grid connection relay 71 is stuck. In the case where the detection signal A is in the Hi state, the control circuit 8 determines that the first grid connection relay 71 is not stuck, and the procedure proceeds to Step S13. In addition, in the case where the detection signal A is in the Lo state, the control circuit 8 determines that the first grid connection relay 71 is stuck, and the procedure proceeds to Step S15.

In Step S13, the control circuit 8 determines whether or not the detection signal B is in the Hi state, so that it is determined whether or not the second grid connection relay 72 is stuck. In the case where the detection signal B is in the Hi state, the control circuit 8 determines that the second grid connection relay 72 is not stuck, and the procedure proceeds to Step S14. In addition, in the case where the detection signal B is in the Lo state, the control circuit 8 determines that the second grid connection relay 72 is stuck, and the procedure proceeds to Step S15.

In Step S14, the control circuit 8 starts operating the inverter circuit 5 so as to allow the grid connection relay 7 to be in the connected state, so that the interconnection operation with the commercial power system 30 is started.

In Step S 15, a user is notified that there is an abnormality. For example, the user may be notified by displaying the abnormality (sticking of the relay) on a display portion (not shown) or sounding an alarm.

### (Sticking Detection During power stoppage of Commercial Power System 30)

Next, the case where the commercial power system 30 is in the power stoppage state will be described. In the case where the commercial power system 30 is in the power stoppage state, when a voltage is applied from the inverter circuit 5 to a pair of lines 81 and 82, when the second grid connection relay is controlled to be in the open state, if the voltage difference detected by the first voltage difference detection circuit 9A is equal to higher than a predetermined value (if the detection signal A is Lo), the control circuit 8 determine that the contact point of the second grid connection relay 72 is stuck.

Voltage application (hereinafter, the operation of the voltage application is referred to as a voltage application operation) from the inverter circuit 5 to the pair of lines 81 and 82 when the sticking detection is performed by the control circuit 8 will be described. In the voltage application operation, a pulse signal (voltage) is output (applied) to the pair of lines 81 and 82 so that the voltage of the pair of lines 81 and 82 connected to the grid connection relays 71 and 72 of which sticking is not detected is higher than the voltage of the pair of lines 81 and 82 connected to the grid connection relays 71 and 72 of which sticking is detected.

In other words, in the case where the sticking of the first grid connection relay 71 is detected, a pulse signal is output so that the line voltage (the voltage of the point X) of the other line 82 of the pair of lines 81 and 82 is higher than the line voltage (the voltage of the point W) of the one line 81 of the pair of lines 81 and 82; and in the case where the sticking of the second grid connection relay 72 is detected, a pulse signal is output by the inverter circuit 5 so that the line voltage (the voltage of the point W) of the one line 81 of the pair of lines 81 and 82 is higher than the line voltage (the voltage of the point X) of the other line 82 of the pair lines 81 and 82 (the control circuit 8 controls the inverter circuit 5 in this manner).

When a voltage is applied from the inverter circuit 5 to the pair of lines 81 and 82, when the first grid connection relay 71 is controlled to be in the open state, if the voltage difference detected by the second voltage difference detection circuit 9B is equal to or higher than a predetermined value (if the detection signal B is Lo), the control circuit 8 determines that the contact point of the first grid connection relay 71 is stuck.

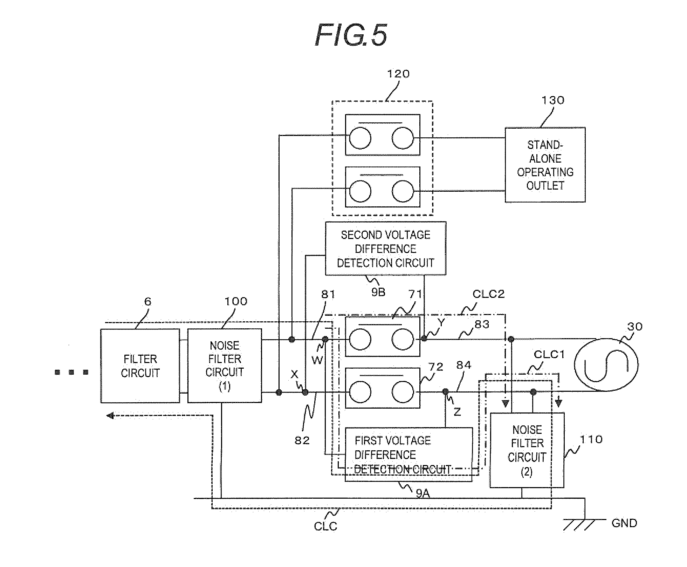

In the case where it is determined that the contact point of the first grid connection relay 71 is stuck, the control circuit 8 allows the second grid connection relay 72 to be in the connected state; and in the case where it is determined that the contact point of the second grid connection relay 72 is stuck, the control circuit 8 allows the first grid connection relay 71 to be in the connected state. In this manner, in the case where a circuit sharing ground (in Fig. 5, the noise filter circuits 100 and 110) is disposed between a noise filter circuit 6 and the grid connection relays 71 and 72 and between the grid connection relay 7 and the commercial power system as illustrated in Fig. 5 by allowing the grid connection relays 71 and 72, of which the determination of the sticking is not performed, to be in the connected state, it is possible to avoid the state where current flows in a closed circuit (for example, CLC indicated by the dotted line in Fig. 5) including the voltage difference detection circuits 9A and 9B and excluding ground so that the sticking is erroneously detected. Hereinafter, the reason will be described. In addition, since the description is simple, the case where the sticking of the second grid connection relay 72 is detected by using the first voltage difference detection circuit 9A is described. However, the same description can be made with respect to the contrary case (the case where the sticking of the first grid connection relay 71 is detected by using the second voltage difference detection circuit 9B).

In the case where the commercial power system 30 is in the power stoppage state, power is not supplied from the grid connection relays 71 and 72 to the lines 83 and 84 of the commercial power system side. Therefore, the voltages of the lines 83 and 84 are not stabilized, so that current flows in the closed circuit CLC, in which the current does not flow if the voltages are stabilized.

If the first grid connection relay 71 of which sticking is not determined is allowed to be in the connected state, a first circuit CLC (in Fig. 5, CLC1 is indicated by a two-dot dashed line) is formed so as to be connected from the point W through the first voltage difference detection circuit 9A to the noise filter circuit, and a second circuit CLC2 (in Fig. 5, CLC2 is indicated by a one-dot dashed line) is formed so as to be connected from the point W through the first grid connection relay 71 to the noise filter circuit. In this case, the first circuit CLC1 and the second circuit CLC2 have a relationship of parallel connection. Since a resistor or the like is not disposed with respect to the second circuit CLC2, the impedance of the second circuit CLC2 is further lowered in comparison with the impedance of the first circuit CLC1 having the first voltage difference detection circuit 9A.

Accordingly, in the case where a voltage is applied between the points W and X, most of the current is branched at the point W to flow through the second circuit CLC2 into the noise filter circuit 110. Therefore, since most of the current does not flow into the first voltage difference detection circuit 9A, it is possible to avoid the situation where the sticking is erroneously detected.

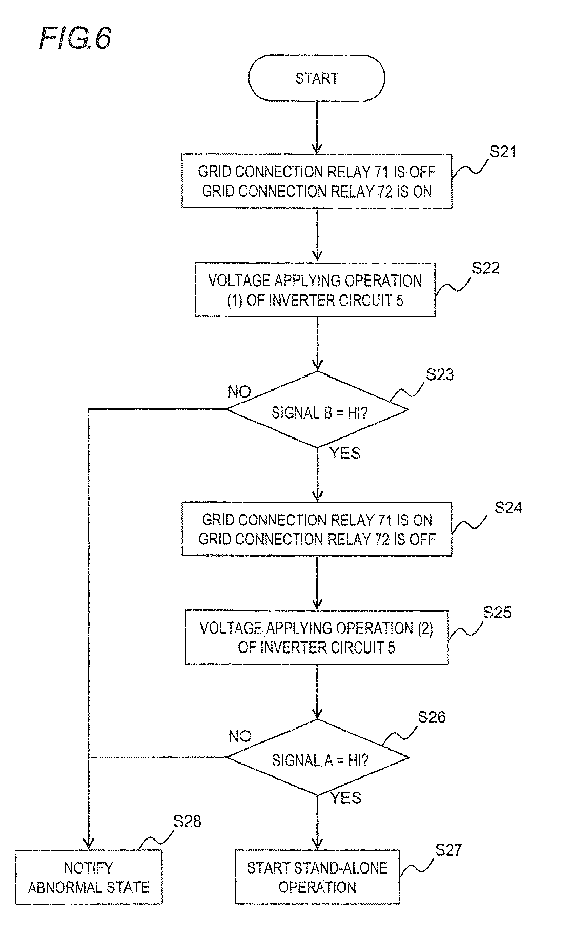

Fig. 6 illustrates the sticking detection flow of the control circuit 8 during the power supply of the commercial power system 30. When the commercial power system 30 is in the power stoppage state, if the sticking detection is started by the control circuit 8, the procedure proceeds to Step S21.

The control circuit 8 transmits signals to the grid connection relays 71 and 72 so that the first grid connection relay 71 is in the open state and the second grid connection relay 72 is in the connected state, and the procedure proceeds to Step S22.

In Step S22, the control circuit 8 allows a pulse signal to be output from the inverter circuit 5 to the pair of lines 81 and 82 so that the voltage of the point X is higher than the voltage of the point W, and the procedure proceeds to Step S23.

In Step S23, the control circuit 8 determines whether or not the detection signal B is in the Hi state, so that it is determined whether or not the first grid connection relay 71 is stuck. In the case where the detection signal B is in the Hi state, the control circuit 8 determines that the first grid connection relay 71 is not stuck, and the procedure proceeds to Step S24. In addition, in the case where the detection signal B is in the Lo state, the control circuit 8 determines that the first grid connection relay 71 is stuck, and the procedure proceeds to Step S28.

In Step S24, the control circuit 8 transmits signals to the grid connection relays 71 and 72 so that the first grid connection relay 71 is in the connected state and the second grid connection relay 72 is in the open state, and the procedure proceeds to Step S25.

In Step S25, the control circuit 8 allows a pulse signal to be output from the inverter circuit 5 to the pair of lines 81 and 82 so that the voltage of the point W is higher than the voltage of the point X, and the procedure proceeds to Step S26.

In Step S26, the control circuit 8 determines whether or not the detection signal A is in the Hi state, so that it is determined whether or not the second grid connection relay 72 is stuck. In the case where the detection signal A is in the Hi state, the control circuit 8 determines that the second grid connection relay 72 is not stuck, and the procedure proceeds to Step S27. In addition, in the case where the detection signal A is in the Lo state, the control circuit 8 determines that the second grid connection relay 72 is stuck, and the procedure proceeds to Step S28.

In Step S27, the control circuit 8 starts the operation of the inverter circuit 5 so as to allow the grid connection relay 7 to be in the open state and to allow the stand-alone operating relay to be in the connected state, so that the stand-alone operation for supplying power to the load is started.

In Step S28, a user is notified that there is an abnormality. For example, the user may be notified by displaying the abnormality (sticking of the relay) on a display portion (not shown) or sounding an alarm.

According to the embodiment, in the case where the commercial power system 30 is operated normally, when the inverter circuit 5 is controlled to be in the stopped state and the grid connection relay 7 is controlled to be in the disconnected state, with respect to the first and second grid connection relays 71 and 72 constituting the grid connection relay 7, a voltage difference between the W side of the first grid connection relay 71 and the Z side of the second grid connection relay 72 and a voltage difference between the Y side of the first grid connection relay 71 and the X side of the second grid connection relay 72 are detected by the voltage difference detection circuits 9A and 9B (photocouplers 91 and 95), respectively, so that it can be detected whether or not the first grid connection relay 71 or the second grid connection relay 72 is stuck before the inverter circuit 5 and the commercial power system 30 are interconnected.

In addition, in the case where the commercial power system 30 is in the power stoppage state, when the grid connection relay 7 is controlled to be in the disconnected state, a pulse signal is output from the inverter circuit 5 so that the voltage at the W side of the first grid connection relay 71 is higher than the voltage at the X side of the second grid connection relay 72, and with respect to the second grid connection relay 72, a voltage difference between the W side of the first grid connection relay 71 and the Z side of the second grid connection relay 72 is detected by the first voltage difference detection circuit 9A (photocoupler 91), so that it can be detected whether or not the second grid connection relay 72 is stuck. Similarly, a pulse signal is output so that the voltage at the X side of the second grid connection relay 72 is higher than the voltage at the W side of the first grid connection relay 71, and with respect to the first grid connection relay 71, a voltage difference between the X side of the second grid connection relay 72 and the Y side of the first grid connection relay 71 is detected by the second voltage difference detection circuit 9B (photocoupler 95), so that it can be detected whether or not the first grid connection relay 71 is stuck.

In addition, since the sticking of the grid connection relays 71 and 72 can be detected by using the first voltage difference detection circuit 9A or the second voltage difference detection circuit 9B, an increase in the number of contact points in the relay is suppressed, so that it is possible to reduce the installation space of the grid connection relays 71 and 72.

In addition, since the sticking of the grid connection relay 7 is determined by individually using the first and second grid connection relays 71 and 72 and the voltage difference detection circuits 9A and 9B, it is possible to mount the circuit for determining the sticking at low cost without using an expensive multi-contact point relay (for example, a relay allowing the connection states to be the same and having a contact point for detecting the connection state besides the contact point for interconnection).

In addition, in the embodiment, in the voltage difference detection circuits 9A and 9B, although a circuit (light-emitting portion side) through which current flows by power supply from the inverter circuit 5 (or the commercial power system 30) and a circuit (light-receiving portion side) from which the detection signals A and B is output are insulated from each other by using the photocouplers 91 and 95, these circuits may be insulated. For example, an isolation transformed or the like may be used. More specifically, when the inverter circuit 5 is controlled to be in the stopped state and the grid connection relay 7 is controlled to be in the disconnected state (open state), with respect to the first grid connection relay 71 and the second grid connection relay 72 constituting the grid connection relay 7, the voltage difference between the W side of the first grid connection relay 71 and the X side of the second grid connection relay 72 and the voltage difference between the Y side of the first grid connection relay 71 and the Z side of the second grid connection relay 72 are detected by transformers, so that it can be detected whether or not the first grid connection relay 71 or the second grid connection relay 72 is stuck before the inverter circuit 5 and the commercial power system 30 are interconnected.

In addition, in the above-described embodiment, in the voltage difference detection circuits 9A and 9B, it is determined by using the photocouplers 91 and 95 whether or not the voltage difference (voltage) between W and Z or between X and Y is equal to or higher than a predetermined value. However, the voltage between W and Z or between X and Y is directly measured by using a voltmeter, and it may be determined whether or not the voltage difference is equal to or higher than the predetermined value.

In addition, in the above-described embodiment, during the power supply period of the commercial power system 30, the control circuit 8 controls the grid connection relays 71 and 72 to be in the open state. However, similarly to the power stoppage period, during the power supply period of the commercial power system 30, one of the grid connection relays 71 and 72 of which sticking is not detected may be controlled to be in the connected state. By doing this, it is possible to securely detect the sticking of the grid connection relays 71 and 72. In addition, in the case where the sticking is detected during the power supply period of the commercial power system 30, when the grid connection relays 71 and 72 are controlled to be in the open state, the count of switching ON and OFF of the relay is reduced, so that lifecycle of the relay can be prolonged.

In addition, in the above-described embodiment, although the inverter apparatus 2 where a plurality of the solar cells 1 and the storage cells 150 as DC power supply are configured as parallel inputs is described, the invention may be adapted to an inverter apparatus where only the one side of the solar cell 1 and the storage cell 150 is configured as an input.

In addition, in the above-described embodiment, although an example where DC power output from the solar cell 1 or the storage cell 150 is used as the DC power is described, DC power output from a fuel cell, power generation facilities such as wind power generation, or the like may be used.

In addition, in the above-described embodiment, although two individual relays of the grid connection relay 71 and the grid connection relay 72 are used, a relay where a plurality of relays such as multi-contact point relays are contained in one housing may be used. Even in this case, since an increase in the number of contact points in the relay can be suppressed, a small-sized multi-contact point relay can be used, so that it is possible to reduce the installation space of the relay.

In addition, in the above-described embodiment, although the AC power is supplied through the stand-alone operating outlet 130 during the stand-alone operation period, a terminal, a terminal block, or the like may be used instead of the stand-alone operating outlet 130. In other words, the inverter apparatus 2 may include a power supply unit (stand-alone operating outlet 130, a terminal block, and the like) which can supply AC power during the stand-alone operation period.

### Description of Reference Numerals

- 1:: Solar Cell
- 2:: Inverter Apparatus
- 4:: Voltage Booster Circuit
- 5:: Inverter Circuit
- 6:: Filter Circuit
- 7:: Grid Connection Relay
- 8:: Control Circuit
- 9A:: First Voltage Difference Detection Circuit
- 9B:: Second Voltage Difference Detection Circuit
- 71:: First Grid Connection Relay
- 72:: Second Grid Connection Relay
- 81, 82:: Pair of Line
- 91, 95:: Photocoupler
- 100, 110:: Noise Filter Circuit
- CLC:: Closed Circuit
- 120:: Stand-Alone Operating Relay
- 130:: Stand-Alone Operating Outlet
- 140:: Charging/Discharging Circuit
- 150:: Storage Cell

## Claims

1. An inverter apparatus comprising:
an inverter circuit which converts DC power into AC power and supplies the AC power to a pair of lines;
first and second grid connection relays which connect the pair of lines and a commercial power system; and
a control circuit which operates the inverter circuit, the first grid connection relay, and the second grid connection relay,
wherein the first grid connection relay is disposed in the line of the pair of lines,
wherein the second grid connection relay is disposed in the other line of the pair of lines,
wherein the inverter apparatus includes a first voltage difference detection circuit which detects a voltage difference between the inverter circuit side of the first grid connection relay and the commercial power system side of the second grid connection relay and a second voltage difference detection circuit which detects a voltage difference between the commercial power system side of the first grid connection relay and the inverter circuit side of the second grid connection relay, and
wherein, in the case where the commercial power system is a power stoppage state, when a voltage is applied from the inverter circuit to the pair of lines, when the second grid connection relay is controlled to be in an open state during the voltage applying operation, if the voltage difference detected by the first voltage difference detection circuit is equal to or higher than a predetermined value, the control circuit determines that a contact point of the second grid connection relay is stuck. , and when a voltage is applied from the inverter circuit to the pair of lines, when the first grid connection relay is controlled to be in an open state, if the voltage difference detected by the second voltage difference detection circuit is equal to or higher than a predetermined value, the control circuit determines that a contact point of the first grid connection relay is struck.

2. The inverter apparatus according to claim 1, wherein when the inverter circuit is stopped, when the first grid connection relay is controlled to be in the open state, if the voltage difference detected by the first voltage difference detection circuit is equal to or higher than a predetermined value, the control circuit determines that the contact point of the first grid connection relay is stuck, and when the inverter circuit is stopped, when the second grid connection relay is controlled to be in the open state, if the voltage difference detected by the second voltage difference detection circuit is equal to or higher than a predetermined value, the control circuit determines that the contact point of the second grid connection relay is stuck.

3. The inverter apparatus according to claim 1 or 2, wherein in the case where sticking of the contact point of the first grid connection relay is determined, the control circuit allows the second grid connection relay to be in the connected state, and in the case where sticking of the contact point of the second grid connection relay is determined, the control circuit allows the first grid connection relay to be in the connected state.

4. The inverter apparatus according to any one of claims 1 to 3,
wherein the first voltage difference detection circuit and/or the second voltage difference detection circuit is a detection circuit having a photocoupler which is operated if current flows in a light-emitting portion,
wherein, if a voltage difference equal to or higher than the predetermined value is applied to the detection circuit, the current flows in the light-emitting portion, so that light is emitted, and
wherein, in the case where the emitted light is detected, the control circuit determines that the relay is stuck.

5. The inverter apparatus according to any one of claims 1 to 4, wherein the DC power is generated from a solar cell, a fuel cell, or power generation facilities such as wind power generation.

6. An inverter apparatus comprising:
an inverter circuit which converts DC power into AC power and supplies the AC power to a pair of lines;
first and second grid connection relays which connect the pair of lines and a commercial power system; and
a control circuit which operates of the inverter circuit, the first grid connection relay, and the second grid connection relay,
wherein the first grid connection relay is disposed in the line of the pair of lines,
wherein the second grid connection relay is disposed in the other line of the pair of lines,
wherein the inverter apparatus includes a first voltage difference detection circuit which detects a voltage difference between the inverter circuit side of the first grid connection relay and the commercial power system side of the second grid connection relay and a second voltage difference detection circuit which detects a voltage difference between the commercial power system side of the first grid connection relay and the inverter circuit side of the second grid connection relay, and
wherein, in the case where the commercial power system is in a power supply state, when the inverter circuit is stopped, when the first grid connection relay is controlled to be in an open state, if the voltage difference detected by the first voltage difference detection circuit is equal to or higher than a predetermined value, the control circuit determines that a contact point of the first grid connection relay is stuck, and when the inverter circuit is stopped, when the second grid connection relay is controlled to be in an open state, if the voltage difference detected by the second voltage difference detection circuit is equal to or higher than a predetermined value, the control circuit determines that a contact point of the second grid connection relay is stuck.
